# EUROPEAN PATENT APPLICATION

(11) **EP 4 650 250 A1**
(43) Date of publication of application: **19.11.2025**
(21) Application number: 25170270.0
(22) Date of filing: 14.04.2025
(51) Int. Cl.: B62D 21/07, B62D 21/08, B62D 21/15, B62D 25/20

(54) **VEHICLE LOWER STRUCTURE**

(30) Priority: 13.05.2024 JP 2024077658
(71) Applicant: MAZDA MOTOR CORPORATION, Hiroshima 730-8670 (JP)
(72) Inventor: Kamemoto, Eiji, Aki-gun, Hiroshima, 730-8670 (JP)
(74) Representative: Müller-Boré & Partner Patentanwälte PartG mbB

(57) **Abstract**

A frame member 11 has paired side beam portions 110 and an inner frame portion 111. The inner frame portion 111 has: plural first oblique beam portions 114, each of which is formed to extend forward to an outer side in a vehicle width direction from an inner side in the vehicle width direction; and plural second oblique beam portions 115, each of which is formed to extend rearward to the outer side in the vehicle width direction from the inner side in the vehicle width direction. The frame member 11 has plural triangular structure portions AR1, each of which is formed by the respective side beam portion 110 and an adjacent pair of the first oblique beam portion 114 and the second oblique beam portion 115 in a front-rear direction, and which continue in the front-rear direction on both sides in the vehicle width direction.

## Description

### [Technical Field]

The present invention relates to a lower structure of a floor section.

### [Background Art]

Research and development of vehicles such as passenger cars have been continuously done to ensure rigidity of a floor section in which an occupant rides and to protect the floor section during a side collision.

As illustrated in FIG. 9, a vehicle disclosed in Patent Literature 1 includes paired side sills 910, a floor tunnel 911, paired first cross members 912, and paired second cross members 913. The paired side sills 910 each extend in a front-rear direction of the vehicle and are disposed on both sides in a vehicle width direction of a floor section. In a central portion in the vehicle width direction, the floor tunnel 911 is formed to cause a part of a floor panel to bulge upward and is formed to extend in the front-rear direction.

Each of the paired first cross member 912 has an inner end portion in the vehicle width direction joined to the floor tunnel 911, is formed to extend obliquely forward to an outer side in the vehicle width direction, and has an outer end portion in the vehicle width direction joined to the respective side sill 910. Each of the paired second cross member 913 has an inner end portion in the vehicle width direction joined to the floor tunnel 911, is formed to extend obliquely rearward to the outer side in the vehicle width direction, and has an outer end portion in the vehicle width direction joined to the respective side sill 910.

Each pair of the first cross member 912 and the second cross member 913 in the vehicle width direction is coupled to each other in a joint portion P90 with the floor tunnel 911.

### [Citation List]

### [Patent Literature]

[Patent Literature 1] JP2007-296957A

### [Summary]

### [Technical Problem]

However, the vehicle disclosed in Patent Literature 1 only includes the single first cross member 912 and the single second cross member 913 on each of right and left sides of the floor tunnel 911. Thus, it is considered that it is difficult to transmit a side collision load F90 input during the side collision to the side sill 910 on an opposite side in the vehicle width direction. That is, it is considered that the side collision load F90 is transmitted to the side sill 910 in the front-rear direction (a load F91) and is the input to the first cross member 912 and the second cross member 913 (a load F92). In this case, the load F92 is concentrated on the joint portion P90. Accordingly, in the vehicle disclosed in Patent Literature 1, there is a case where joint among the cross members 912, 913 and the floor tunnel 911 is broken at the joint portion P90. Thus, it is considered that the side collision load F90 cannot be transmitted to the side sill 910 on the opposite side in the vehicle width direction. In the case where the side collision load F90 cannot be transmitted to the side sill 910 on the opposite side in the vehicle width direction, just as described, it is concerned that the floor section is not protected sufficiently and thus deformation, partial breakage, or the like possibly occurs.

The invention has been made to solve the problem as described above, and an object of the invention is to provide a vehicle lower structure capable of protecting a floor section by transmitting an input side collision load to a side sill on an opposite side in a vehicle width direction even when the side collision load is input to a side sill from an obstacle such as a pole during a side collision.

### [Solution to Problem]

The present invention is defined in claim 1. Particularly, a lower structure (or a vehicle lower structure, or a vehicle body structure) of a floor section in a vehicle includes paired side sills and a frame member. The paired side sills are disposed on both sides in a vehicle width direction of the floor section and are each formed to extend in a front-rear direction of the vehicle. The frame member is disposed between the paired side sills.

The frame member has paired side beam portions and an inner frame portion. Each of the paired side beam portions is formed to extend in the front-rear direction along the respective side sill, and is connected to the respective side sill. The inner frame portion is formed by combining plural beam structure portions and connects the paired side beam portions.

In the lower structure according to the present invention, the frame member has plural triangular structure portions, each of which is formed in a triangular shape in a plan view by the respective side beam portion and the plural beam structure portions, and which continue in the front-rear direction on both of the sides in the vehicle width direction.

In the lower structure according to the present invention, the frame member, which has the plural triangular structure portions continuing in the front-rear direction, is disposed between the side sills. The triangular structure portion having the triangular shape in the plan view has higher load-bearing property than a single long beam. In addition, in the frame member, the plural triangular structure portions are configured to continue in the front-rear direction. Thus, even when a side collision load is input to any portion in the front-rear direction of the side sill, the side collision load is supported by the triangular structure portions of the frame member. Accordingly, in the lower structure according to the present invention, even when the side collision load is input from any portion in the front-rear direction of one of the side sills, the load can be transmitted from the side beam portion on the opposite side in the vehicle width direction to the side sill via the inner frame portion while the load is supported by the triangular structure portions. In this way, in the lower structure according to the present invention, the floor section can be protected sufficiently even when the side collision load is input to one of the side sills from an obstacle such as a pole during a side collision.

Each of the triangular structure portions provided in the frame member is a similar portion to a so-called truss structure in a point of having a triangular hollow portion therein in the plan view. However, the connection portion between the side beam portion and the plural beam structure portions and the connection portion between the plural beam structure portions are not limited to those fastened by a bolt, a rivet, or the like, and include an aspect of being formed integrally and an aspect of being fixed.

In the lower structure, such a configuration may be adopted that the plural beam structure portions include plural first oblique beam portions and plural second oblique beam portions, the plural first oblique beam portions being each formed to extend obliquely forward to an outer side in the vehicle width direction from an inner side in the vehicle width direction, an outer end portion in the vehicle width direction of each of the plural first oblique beam portions being connected to the respective side beam portion, the plural second oblique beam portions being each formed to extend obliquely rearward to the outer side in the vehicle width direction from the inner side in the vehicle width direction, and an outer end portion in the vehicle width direction of each of the plural second oblique beam portions being connected to the respective side beam portion, that the first oblique beam portions and the second oblique beam portions are alternately arranged in the front-rear direction on each side in the vehicle width direction, and the end portions of an adjacent pair of the first oblique beam portion and the second oblique beam portion in the front-rear direction are connected to each other, and that each of the plural triangular structure portions is formed by the side beam portion and the adjacent pair of the first oblique beam portion and the second oblique beam portion.

In the lower structure according to the above aspect, the end portions of each adjacent pair of the first oblique beam portion and the second oblique beam portion in the front-rear direction are connected. Thus, it is configured that a clearance is not provided between the triangular structure portions in the front-rear direction. Thus, the side collision load is distributed to the adjacent triangular structure portions in the front-rear direction via the side beam portion, and the side collision load can be transmitted effectively to the side sill on an opposite side in the vehicle width direction.

In the lower structure, such a configuration may be adopted that the plural beam structure portions further include paired longitudinal beam portions, each of which is formed to extend in the front-rear direction and is disposed to connect connection portions between the adjacent pairs of the first oblique beam portions and the second oblique beam portions, and that, in the case where the plural triangular structure portions are plural first triangular structure portions, the frame member has plural second triangular structure portions, each of which is formed by the respective longitudinal beam portion and the adjacent pair of the first oblique beam portion and the second oblique beam portion, and which continue in the front-rear direction on both of the sides in the vehicle width direction.

In the lower structure according to the above aspect, the frame member has the plural second triangular structure portions in the manner to continue in the front-rear direction. Thus, even when the side collision load is input to one of the side sills, the load can be transmitted to the side sill from the side beam portion on the opposite side in the vehicle width direction via the inner frame portion while the load is supported by the first triangular structure portions and the second triangular structure portions. In this way, in the lower structure according to the above aspect, the floor section can be protected further sufficiently even when the side collision load is input to one of the side sills from the obstacle such as the pole during the side collision.

Each of the second triangular structure portions is also a similar portion to the so-called truss structure in a point of having a triangular hollow portion therein in the plan view. Here, the connection portion between the longitudinal beam portion and the adjacent pair of the first oblique beam portion and the second oblique beam portion in the front-rear direction and the connection portion between the first oblique beam portion and the second oblique beam portion are not limited to those fastened by a bolt, a rivet, or the like, and include an aspect of being formed integrally and an aspect of being fixed.

In the lower structure, such a configuration may be adopted that the plural beam structure portions further include plural lateral beam portions, each of which is formed to extend in the vehicle width direction and connects a connection portion between the first oblique beam portion and the second oblique beam portion on one side in the vehicle width direction and a connection portion between the first oblique beam portion and the second oblique beam portion on the other side in the vehicle width direction.

In the lower structure according to the above aspect, since the frame member has the lateral beam portions, each of which connects the triangular structure portions disposed on each side in the vehicle width direction, the side collision load, which is input from the side sill on the one side in the vehicle width direction, can be transmitted to the side sill on the other side via the lateral beam portions.

The lower structure may adopt such a configuration that the connection portion between the first oblique beam portion and the second oblique beam portion on one side in the vehicle width direction is directly connected to the connection portion between the first oblique beam portion and the second oblique beam portion on the other side in the vehicle width direction.

In the lower structure according to the above aspect, vertices (the connection portions between the first oblique beam portions and the second oblique beam portions) of the triangular structure portions on both of the sides in the vehicle width direction are directly connected to each other. Therefore, it is possible to transmit the side collision load, which is input from the side sill on the one side in the vehicle width direction, to the side sill on the other side only via the triangular structure portions on both of the sides in the vehicle width direction.

The lower structure may adopt such a configuration that at least one of the plural beam structure portions has: paired side wall portions that are formed to extend along an extending direction of the respective beam structure portion; and a rib that is formed to connect the paired side wall portions.

In the lower structure according to the above aspect, since at least one of the plural beam structure portions provided in the frame member has the rib. Thus, compared to a case where the rib is not provided, a weight reduction and high rigidity against the load are simultaneously achieved. Therefore, it is further effective to protect the floor section during the side collision while weight of the vehicle is reduced.

In the lower structure, such a configuration may be adopted that the frame member is formed integrally.

In the lower structure according to the above aspect, since the frame member is formed integrally, the number of components can be reduced in comparison with a case where the portions are formed by separate members. Therefore, it is possible to reduce manufacturing cost from a viewpoint of reducing man-hours for component management at the time of manufacturing and a viewpoint of reducing man-hours for connecting the portions.

In the lower structure, such a configuration may be adopted that the paired side beam portions are respectively fixed to the paired side sills.

In the lower structure according to the above aspect, since the side beam portion is fixed to the side sill, the side collision load, which is input to the side sill during the side collision, is efficiently transmitted to the inner frame portion via the side beam portion.

In the lower structure, such a configuration may be adopted that each of the paired side sills has an outer side sill that is disposed on the outer side in the vehicle width direction and an inner side sill that is disposed on the inner side in the vehicle width direction and is fixed to the outer side sill, and of the outer side sill and the inner side sill that constitute the respective side sill, at least the inner side sill is integrally formed with the frame member.

In the lower structure according to the above aspect, of the outer side sill and the inner side sill that constitute the side sill, at least the inner side sill is integrally formed with the frame member. Thus, compared to a case where the inner side sill is formed by a different member from the frame member, the number of the components can be reduced. Therefore, it is possible to reduce the manufacturing cost from the viewpoint of reducing the man-hours for the component management at the time of manufacturing and the viewpoint of reducing the man-hours for fixing the frame member and the inner side sill.

### [Advantageous Effects]

In the lower structure according to the present invention, even when the side collision load is input to the side sill from the obstacle such as the pole during the side collision, the floor section can be protected by transmitting the input side collision load to the side sill on the opposite side in the vehicle width direction.

### [Brief Description of Drawings]

[FIG. 1] FIG. 1 is a plan view illustrating a partial configuration of a vehicle, to which a lower structure according to a first embodiment of the invention is applied.
[FIG. 2] FIG. 2 is a plan view illustrating a configuration of a frame member.
[FIG. 3] FIG. 3 is a plan view illustrating ribs provided in the frame member.
[FIG. 4] FIG. 4 is a cross-sectional view illustrating a cross section that is taken along line IV-IV in FIG. 3.
[FIG. 5] FIG. 5 is a cross-sectional view illustrating a configuration of a rib according to a first modified example.
[FIG. 6] FIG. 6 is a cross-sectional view illustrating a configuration of a rib according to a second modified example.
[FIG. 7] FIG. 7 is a cross-sectional view illustrating a joint structure of the frame member to a side sill.
[FIG. 8] FIG. 8 is a plan view illustrating a partial configuration of a vehicle, to which a lower structure according to a second embodiment of the invention is applied.

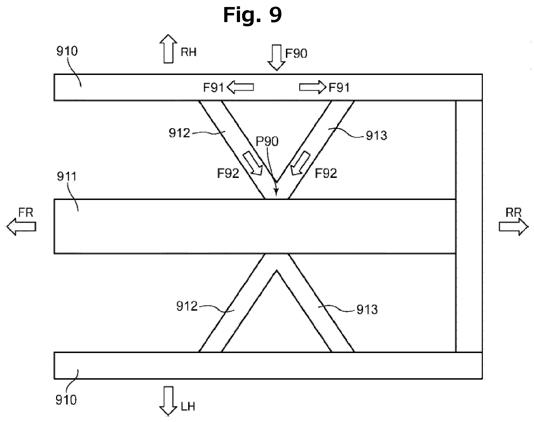

[FIG. 9] FIG. 9 is a plan view illustrating a lower structure of a vehicle according to the related art.

### [Description of Embodiments]

A description will hereinafter be made on embodiments of the invention with reference to the drawings. The invention will be exemplified in the embodiments described below, and the invention is not limited to the following embodiments.

In the drawings used in the following description, "FR" indicates a vehicle front direction, "RR" indicates a vehicle rear direction, "LH" indicates a vehicle left direction, "RH" indicates a vehicle right direction, "UP" indicates a vehicle up direction, and "LO" indicates a vehicle down direction. Furthermore, in the following description, a front-rear direction of the vehicle will simply be described as a "front-rear direction", and an up-down direction of the vehicle will simply be described as an "up-down direction".

### [First Embodiment]

### 1. Configuration of Vehicle 1

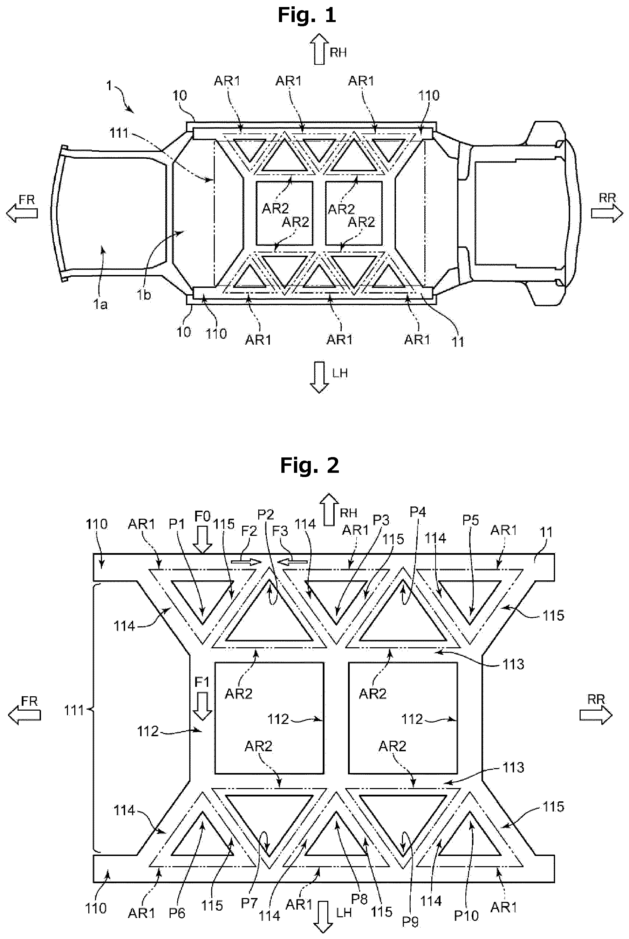

A description will be made on a partial configuration of a vehicle 1, to which a lower structure (or a vehicle lower structure) according to a first embodiment is applied, with reference to FIG. 1. FIG. 1 only extracts and illustrates a part of the lower structure of the vehicle 1, and does not illustrate a power train and the like.

As illustrated in FIG. 1, the vehicle 1 may include a powertrain mounting section 1a in which the powertrain is mounted on a front portion, and includes a floor section 1b as an area that may be located behind the powertrain mounting section 1a and in which one or more occupants rides. The floor section 1b includes paired side sills 10 and a frame member 11.

The paired side sills 10 are disposed on both sides in a vehicle width direction of the floor section 1b and are each formed to extend in the front-rear direction (or a front-rear direction of the vehicle (1)). The frame member 11 is disposed between the paired side sills 10 in a manner to connect the side sill 10 on a vehicle left side and the side sill 10 on a vehicle right side.

The frame member 11 has paired side beam portions 110 and an inner frame portion 111. Each of the paired side beam portions 110 is formed to extend in the front-rear direction along the respective side sill 10, and is connected to the respective side sill 10. The inner frame portion 111 is formed by combining plural beam structure portions (each portion having an elongated shape), and connects the paired side beam portions 110 to each other.

A detailed description will be made below on the plural beam structure portions, which constitute the inner frame portion 111, and combinations thereof.

The frame member 11 has plural (e.g., three each on the right and left sides, a total of six) triangular structure portions (or first triangular structure portions) AR1 and plural (e.g., two each on the right and left sides, a total of four) triangular structure portions (or second triangular structure portions) AR2. For example, each of the triangular structure portions AR1, AR2 is formed to have a triangular picture frame shape (triangular frame shape) in a plan view by combining the paired side beam portions 110 and the plural beam structure portions constituting the inner frame portion 111.

On each of the right and left sides, the plural triangular structure portions AR1 may be disposed to continue in the front-rear direction. On each of the right and left sides, the plural triangular structure portions AR2 may also be disposed to continue in the front-rear direction.

### 2. Detailed Structure of Inner Frame Portion 111 and Triangular Structure Potions AR1, AR2

A description will be made on a detailed structure of the inner frame portion 111 and the triangular structure portions AR1, AR2 with reference to FIG. 2. FIG. 2 is a plan view in which the frame member 11 is extracted.

For example, as illustrated in FIG. 2, the inner frame portion 111 has plural lateral beam portions 112, paired right and left longitudinal beam portions 113, plural first oblique beam portions 114, and plural second oblique beam portions 115. In a central portion in the vehicle width direction of the floor section 1b, the plural (three as an example) lateral beam portions 112 are disposed at mutually-spaced intervals in the front-rear direction and are each formed to extend in the vehicle width direction.

Particularly, the paired right and left longitudinal beam portions 113 each extend in the front-rear direction and are disposed to connect right and left end portions of the plural lateral beam portions 112.

An inner end portion in the vehicle width direction of each of the plural first oblique beam portions 114 may be connected to the respective lateral beam portion 112 and the respective longitudinal beam portion 113, and an outer end portion thereof may be connected to the respective side beam portion 110. Particularly, the plural first oblique beam portions 114 are disposed to extend obliquely forward to the outer side in the vehicle width direction from connection portions P1, P3, P5, P6, P8, P10 with the lateral beam portions 112 and the longitudinal beam portions 113.

An inner end portion in the vehicle width direction of each of the plural second oblique beam portions 115 may be connected to the respective lateral beam portion 112 and the respective longitudinal beam portion 113, and an outer end portion thereof may be connected to the respective side beam portion 110. Particularly, the plural second oblique beam portions 115 are disposed to extend obliquely rearward to the outer side in the vehicle width direction from the connection portions P1, P3, P5, P6, P8, P10 with the lateral beam portions 112 and the longitudinal beam portions 113.

For example, in the front-rear direction, the first oblique beam portions 114 and the second oblique beam portions 115 are alternately arranged. Then, the inner end portions in the vehicle width direction of each adjacent pair of the first oblique beam portion 114 and the second oblique beam portion 115 in the front-rear direction are connected in respective one of the connection portions P1, P3, P5, P6, P8, P10 without being spaced apart in the front-rear direction.

Particularly, the outer end portions in the vehicle width direction of each adjacent pair of the second oblique beam portion 115 and the first oblique beam portion 114 in the front-rear direction are connected in respective one of connection portions P2, P4, P7, P9 without being spaced apart in the front-rear direction.

In the frame member 11, each of the paired right and left side beam portions 110, the paired right and left longitudinal beam portions 113, the plural first oblique beam portions 114, and the plural second oblique beam portions 115 may be a long frame portion. Particularly, in the present embodiment, the frame member 11 is configured by integrally or unitary forming the paired right and left side beam portions 110, the plural lateral beam portions 112, the paired right and left longitudinal beam portions 113, the plural first oblique beam portions 114, and the plural second oblique beam portions 115. For example, a casting method can be adopted as a method for forming the frame member 11.

In the frame member 11, the first oblique beam portion 114, the second oblique beam portion 115 disposed behind, and the side beam portion 110 form the triangular structure portion AR1 in the form of having the triangular picture frame shape (triangular frame shape) in the plan view. As described above, the triangular structure portions AR1 may continue in the front-rear direction between the right vertical beam portion 113 and the right side beam portion 110 and between the left vertical beam portion 113 and the left side beam portion 110.

For example, in the frame member 11, the second oblique beam portion 115, the first longitudinal beam portion 113 disposed behind, and the longitudinal beam portion 113 form the triangular structure portion AR2 in the form of having the triangular picture frame shape (triangular frame shape) in the plan view. The triangular structure portions AR2 may also continue in the front-rear direction between the right vertical beam portion 113 and the right side beam portion 110 and between the left vertical beam portion 113 and the left side beam portion 110.

In the front-rear direction, the triangular structure portions AR1 and the triangular structure portions AR2 may be alternately arranged.

### 3. Detailed structure of Beam Structure Portions in Inner Frame Portion 111

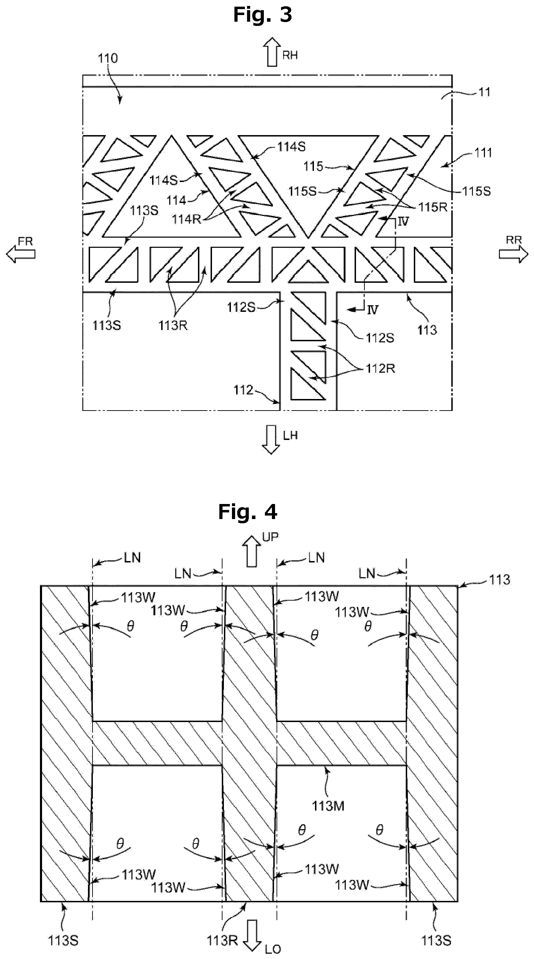

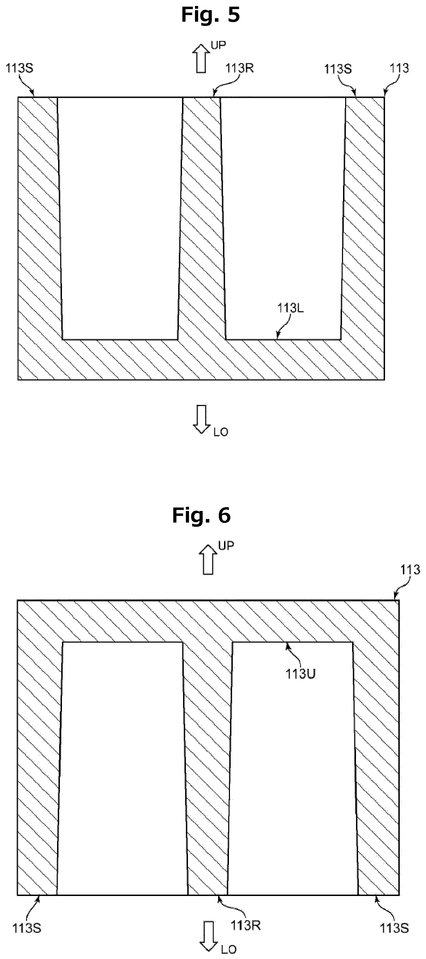

A description will be made on a detailed structure of the beam structure portions in the inner frame portion 111 with reference to FIG. 3 to FIG. 6. FIG. 3 is a plan view illustrating the detailed structure of the beam structure portions (the lateral beam portion 112, the longitudinal beam portion 113, the first oblique beam portion 114, and the second oblique beam portion 115) in the inner frame portion 111. FIG. 4 is a cross-sectional view illustrating a cross section that is taken along line IV-IV in FIG. 3. FIG. 5 and FIG. 6 each illustrate a modified example.

As illustrated in FIG. 3, the beam structure portions in the inner frame portion 111 may include paired side wall portions 112S, 113S, 114S, 115S and/or ribs 112R, 113R, 114R, 115R.

For example, in the present embodiment, all the beam structure portions have the ribs 112R, 113R, 114R, 115R, respectively. However, one or more of the beam structure portions may have the ribs.

In the lateral beam portion 112, the paired side wall portions 112S may each be formed to extend in the vehicle width direction, and may be formed to oppose each other at positions away from each other in the front-rear direction. In the first oblique beam portion 114, the paired side wall portions 114S may each be formed to extend in an oblique direction that is inclined with respect to the vehicle width direction and the front-rear direction, and may be formed to oppose each other in a direction orthogonal to the extending direction.

In the second oblique beam portion 115, the paired side wall portions 115S may each be formed to extend in an oblique direction that is inclined with respect to the vehicle width direction and the front-rear direction, and may be formed to oppose each other in a direction orthogonal to the extending direction. In the longitudinal beam portion 113, the paired side wall portions 113S may each be formed to extend in the front-rear direction, and may be formed to oppose each other in the vehicle width direction.

In the lateral beam portion 112, the plural ribs 112R may each be formed to connect between the paired side wall portions 112S in the lateral beam portion 112. In the first oblique beam portion 114, the plural ribs 114R may each be formed to connect between the paired side wall portions 114S in the first oblique beam portion 114. In the second oblique beam portion 115, the plural ribs 115R may each be formed to connect between the paired side wall portions 115S in the second oblique beam portion 115. In the longitudinal beam portion 113, the plural ribs 113R may each be formed to connect between the paired side wall portions 113S in the longitudinal beam portion 113.

For example, as illustrated in FIG. 4, in an intermediate portion in the up-down direction of the longitudinal beam portion 113, an intermediate base 113M is provided to connect between the paired side wall portions 113S. The rib 113R is provided to rise in both directions of the up-down direction with the intermediate base 111M as a starting point. Particularly, side wall surfaces 113W of the paired side wall portions 113S and side wall surfaces 113W of the rib 113R may each be formed to have a draft angle θ with respect to an imaginary line LN drawn in a vertical direction.

Although not illustrated, the lateral beam portion 112, the plural first oblique beam portions 114, and the plural second oblique beam portions 115 each have a similar configuration to that illustrated in FIG. 4.

At least one or more of the lateral beam portions 112, the longitudinal beam portions 113, the plural first oblique beam portions 114, and the plural second oblique beam portions 115 may have a configuration as illustrated in FIG. 5 or FIG. 6. For example, as illustrated in FIG. 5, the longitudinal beam portion 113 in a first modified example may have, in a lower portion, a lower base 113L that connects the paired side wall portions 113S, and the rib 113R may be provided to rise upward with the lower base 113L being a starting point. The lateral beam portion 112, the plural first oblique beam portions 114, and the plural second oblique beam portions 115 may each have a similar configuration to that illustrated in FIG. 5.

As illustrated in FIG. 6, the longitudinal beam portion 113 in a second modified example may have, in an upper portion, an upper base 113U that connects the paired side wall portions 113S, and the rib 113R may be provided to be hung downward with the upper base 113U as a starting point. The lateral beam portion 112, the plural first oblique beam portions 114, and the plural second oblique beam portions 115 may each have a similar configuration to that illustrated in FIG. 6.

### 4. Fixed Structure of Frame Member 11 to Side Sill 10

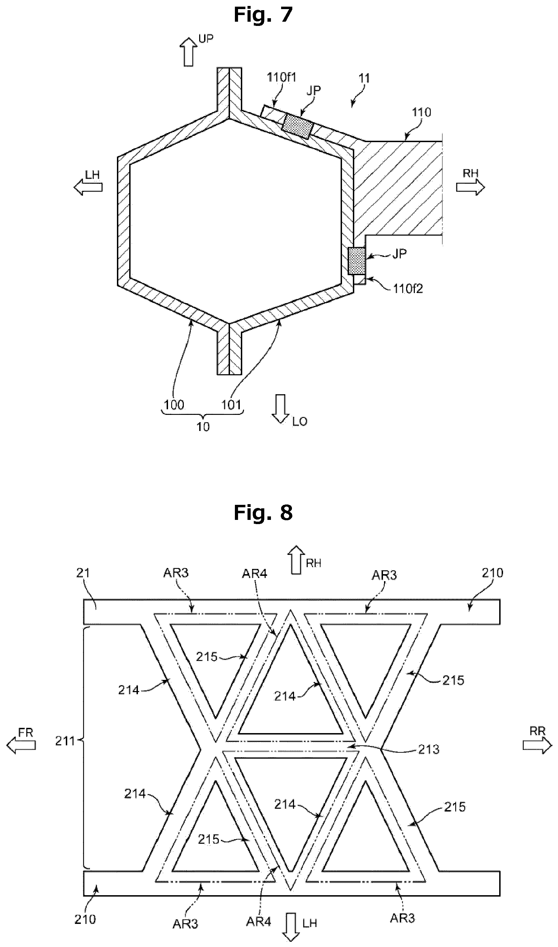

A description will be made on a fixed (or fixing) structure of the frame member 11 to the side sill 10 with reference to FIG. 7. FIG. 7 is a cross-sectional view illustrating the side sill 10 disposed on the left side and a part of the side beam portion 110 in the frame member 11.

As illustrated in FIG. 7, the side sill 10 of the vehicle 1 according to the present embodiment may be formed by a combination of an outer side sill 100 and an inner side sill 101. The outer side sill 100 is a portion that is disposed on the outer side in the vehicle width direction. The inner side sill 101 is a portion that is disposed on the inner side in the vehicle width direction.

The outer side sill 100 and the inner side sill 101 may each have a hat-like cross-sectional shape, and may constitute the side sill 10 having a closed cross-sectional structure by fixing flange portions thereof to each other.

The side beam portion(s) 110 in the frame member 11 may have: a flange portion 110f1 that is formed along a part of an upper surface of the inner side sill 101; and a flange portion 110f2 that is formed along a part of an inner wall surface of the inner side sill 101.

The flange portions 110f1, 110f2 of the side beam portion 110 are each fixed to the inner side sill 101 in a fixed portion JP. In this way, the frame member 11 is fixed to the side sill 10. A method for fixing the side beam portion 110 to the inner side sill 101 is not particularly limited. For example, fastening using a bolt or a rivet, welding (e.g., resistance welding, laser welding), or the like can be employed.

In the present embodiment, the outer side sill 100 and the inner side sill 101 are separate members from the frame member 11, but at least the inner side sill 101 may be integrally or unitary formed with the frame member 11. When at least the inner side sill 101 is integrally or unitary formed with the frame member 11 as described above, the number of components can be reduced in comparison with a case where the inner side sill 101 is formed as a separate member from the frame member 11. Therefore, it is possible to reduce manufacturing cost from a viewpoint of reducing man-hours for component management at the time of manufacturing and a viewpoint of reducing man-hours for fixing the frame member and the inner side sill.

### 5. Effects

In the vehicle 1, to which the lower structure according to the present embodiment is applied, the frame member 11 has the plural triangular structure portions AR1 that continue in the front-rear direction, and is disposed between the side sills 10. The triangular structure portions AR1, each of which has the triangular picture frame shape in the plan view, each have a higher load bearing property than a single beam. In addition, as illustrated in FIG. 2, the plural triangular structure portions AR1 are configured to continue in the front-rear direction in the frame member 11. Thus, even when a side collision load F0 is input from any portion in the front-rear direction of the side sill 10, the side collision load F0 can be supported by the triangular structure portions AR1 of the frame member 11. Therefore, in the vehicle 1, even when the side collision load F0 is input to any portion in the front-rear direction of one of the side sills 10, as illustrated in F1 of FIG. 2, it can be transmitted from the side beam portion 110 on the opposite side in the vehicle width direction to the side sill 10 via the inner frame portion 111 while the load F0 is supported by the triangular structure portions AR1. In this way, in the vehicle 1, the floor section 1b can be protected sufficiently even when an obstacle such as a pole collides from the side.

Each of the triangular structures AR1 provided in the frame member 11 is a similar portion to a so-called truss structure in a point of having a triangular hollow portion therein in the plan view. Here, the connection portions P2, P4, P7, P9 between the side beam portions 110 and pairs of the first oblique beam portions 114 and the second oblique beam portions 115 and the connection portions P1, P3, P5, P6, P8, P10 between the pairs of the first oblique beam portions 114 and the second oblique beam portions 115 and the lateral beam portions 112 are formed to be integrally continuous with each other. Thus, the triangular structure portion AR1 differs from the truss structure.

Particularly, in the vehicle 1, to which the lower structure according to the present embodiment is applied, each adjacent pair of the first oblique beam portion 114 and the second oblique beam portion 115 in the front-rear direction are connected in respective one of the end portions thereof (the connection portions P1, P3, P5, P6, P8, P10). Thus, it is configured that a clearance is not provided between the triangular structure portions AR1 in the front-rear direction. Thus, the side collision load F0 is distributed to the adjacent triangular structure portions AR1 in the front-rear direction via the side beam portion 110 (the loads F2, F3), and the side collision load F0 can be transmitted efficiently to the side sill 10 on the opposite side in the vehicle width direction (the load F1).

Further particularly, in the vehicle **1,** to which the lower structure according to the present embodiment is applied, the frame member 11 has the plural triangular structure portions (the second triangular structure portions) AR2 in the manner to continue in the front-rear direction, in addition to the triangular structure portions AR1. Thus, even when the side collision load F0 is input to one of the side sills 10, the load F0 can be transmitted to the side sill 10 from the side beam portion 110 on the opposite side in the vehicle width direction via the inner frame portion 111 (the load F1) while the load F0 is supported by the triangular structure portions AR1 and the triangular structure portions AR2. In this way, in the vehicle 1, the floor section 1b can be protected further sufficiently even when the obstacle such as the pole collides from the side.

Each of the triangular structures AR2 is also a similar portion to the so-called truss structure in a point of having a triangular hollow portion therein in the plan view. Here, in the present embodiment, the connection portions P2, P4, P7, P9 between the longitudinal beam portions 112 and the pairs of the first oblique beam portions 114 and the adjacent second oblique beam portions 115 in the front-rear direction and the connection portions P1, P3, P5, P6, P8, P10 among the first oblique beam portions 114, the second oblique beam portions 115, and the longitudinal beam portions 113 are integrally formed in the present embodiment. Thus, the triangular structure AR2 also differs from the truss structure.

Further particularly, in the vehicle 1, to which the lower structure according to the present embodiment is applied, since the frame member 11 has the lateral beam portions 112 that connect the triangular structure portions AR1 disposed on each side in the vehicle width direction, the side collision load F0, which is input from the side sill 10 on the one side in the vehicle width direction, can be transmitted to the side sill 10 on the other side via the lateral beam portions 112 (the load F1).

Further particularly, in the vehicle 1, to which the lower structure according to the present embodiment is applied, the portions 112 to 115 in the frame member 11 have the ribs 112R, 113R, 114R, 115R, respectively. Thus, a weight reduction and high rigidity against the load are simultaneously achieved in comparison with a case where the ribs are not provided. Therefore, it is further effective to protect the floor section 1b during the side collision while weight of the vehicle 1 is reduced.

Further particularly, in the vehicle 1, to which the lower structure according to the present embodiment is applied, the portions 110, 112 to 115 that constitute the frame member 11 are formed integrally. Thus, compared to a case where each of the portions is formed by a separate member, the number of the components can be reduced, and it is possible to reduce manufacturing cost from a viewpoint of reducing man-hours for component management at the time of manufacturing and a viewpoint of reducing man-hours for connecting the portions.

Further particularly, in the vehicle 1, to which the lower structure according to the present embodiment is adopted, since the side beam portion 110 is fixed to the side sill 10, the load F0, which is input to the side sill 10 during the side collision, is efficiently transmitted to the inner frame portion 111 via the side beam portion 110.

As it has been described so far, the lower structure of the vehicle 1 according to the present embodiment can protect the floor section by transmitting an input side collision load to the side sill on the opposite side in the vehicle width direction even when the side collision load is input from the obstacle such as the pole during the side collision.

### [Second Embodiment]

A description will be made on a configuration of a vehicle, to which a lower structure according to a second embodiment is applied, with reference to FIG. 8. The vehicle, to which the lower structure according to the present embodiment is applied, has the same configuration as that in the above first embodiment except for a configuration of a frame member 21. Thus, the following description will be made on the configuration of the frame member 21 as a different point from the above first embodiment.

For example, as illustrated in FIG. 8, the frame member 21 in the present embodiment has paired side beam portions 210 and an inner frame portion 211. Each of the paired side beam portions 210 is formed to extend in the front-rear direction along the respective side sill (not illustrated in FIG. 8), and is connected to the respective side sill. The inner frame portion 211 is formed by combining plural beam structure portions, and connects the paired side beam portions 210 to each other.

The inner frame portion 211 may have a longitudinal beam portion 213, plural (two each on the right and left sides as an example) first oblique beam portions 214, and plural (two each on the right and left sides as an example) second oblique beam portions 215. Unlike the inner frame portion 111 in the above first embodiment, the inner frame portion 211 does not have a lateral beam portion that extends in the vehicle width direction in an intermediate portion in the vehicle width direction.

In a central portion in the vehicle width direction, the longitudinal beam portion 213 of the inner frame portion 211 may be formed to extend in the front-rear direction. In the present embodiment, the longitudinal beam portion 213 is disposed in a substantially central portion in the vehicle width direction.

An inner end portion in the vehicle width direction of each of the plural first oblique beam portions 214 may be connected to the longitudinal beam portion 213, and an outer end portion thereof may be connected to the respective side beam portion 210. The plural first oblique beam portions 214 are each disposed to extend obliquely forward to the outer side in the vehicle width direction from a connecting portion with the longitudinal beam portion 213.

An inner end portion in the vehicle width direction of each of the plural second oblique beam portions 215 may be connected to the longitudinal beam portion 213, and an outer end portion thereof is connected to the respective side beam portion 210. The plural second oblique beam portions 215 may each be disposed to extend obliquely rearward to the outer side in the vehicle width direction from a connection portion with the longitudinal beam portion 213.

For example, in the front-rear direction, the first oblique beam portions 214 and the second oblique beam portions 215 are alternately arranged. Then, the inner end portions in the vehicle width direction of each adjacent pair of the first oblique beam portion 214 and the second oblique beam portion 215 in the front-rear direction are connected in the connection portion with the longitudinal beam portion 213 without being spaced apart in the front-rear direction.

Particularly, the outer end portions in the vehicle width direction of each adjacent pair of the second oblique beam portion 215 and the first oblique beam portion 214 in the front-rear direction are connected in the connection portion with the respective side beam portion 210 without being spaced apart in the front-rear direction.

In the frame member 21, each of the paired right and left side beam portions 210, the longitudinal beam portion 213, the plural first oblique beam portions 214, and the plural second oblique beam portions 215 may be a long frame portion. Particularly, in the present embodiment, the frame member 21 is configured by integrally or unitary forming the paired right and left side beam portions 210, the longitudinal beam portion 213, the plural first oblique beam portions 214, and the plural second oblique beam portions 215. For example, the casting method can be adopted as a method for forming the frame member 21.

The frame member 21 has plural (e.g., two each on the right and left sides, a total of four) triangular structure portions (i.e., first triangular structure portions) AR3 and plural (e.g., one each on the right and left sides, a total of two) triangular structure portions (i.e., second triangular structure portions) AR4. The triangular structure portions AR3, AR4 are each formed to have a triangular picture frame shape in the plan view by combining the paired side beam portions 210 and the plural beam structure portions constituting the inner frame portion 211.

For example, each of the triangular structure portions AR3 is formed by the side beam portion 210 and an adjacent pair of the first oblique beam portion 214 and the second oblique beam portion 215 in the front-rear direction. Here, in the triangular structure portion AR3 formed on the left side in the vehicle width direction and the triangular structure portion AR3 formed on the right side, connection portions between the first oblique beam portions 214 and the second oblique beam portions 215 may be directly connected to each other. That is, in the present embodiment, the triangular structure portion AR3 formed on the left side in the vehicle width direction and the triangular structure portion AR3 formed on the right side are directly connected without the lateral beam portion being interposed therebetween.

Each of the triangular structure portions AR4 may be formed by the longitudinal beam portion 213 and an adjacent pair of the second oblique beam portion 215 and the first oblique beam portion 214 in the front-rear direction. For example, the triangular structure portion AR4 formed on the left side in the vehicle width direction and the triangular structure portion AR4 formed on the right side are configured to share the longitudinal beam portion 213.

In the vehicle, to which the lower structure according to the present embodiment is applied, the structure of the frame member 21 differs from that in the above first embodiment. However, since the frame member 21 has the triangular structure portions AR3, AR4, it is possible to exert the same effects as those in the above first embodiment. Particularly, also in the present embodiment, the frame member 21 has the triangular structure portions AR3, AR4, and thus the side collision load is supported by the triangular structure portions AR3, AR4 even when the side collision load is input from any portion in the front-rear direction of the side sill. Accordingly, in the vehicle, even when the side collision load is input to any portion in the front-rear direction of one of the side sills, the load can be transmitted from the side beam portion 210 on the opposite side in the vehicle width direction to the side sill while the load is supported by the triangular structure portions AR3, AR4. In this way, in the vehicle, the floor section can be protected sufficiently even when the side collision load is input from the obstacle such as the pole during the side collision.

Also, in the present embodiment, similar to the above first embodiment, such a configuration may be adopted that at least a part of the inner frame portion 211 has a pair of side wall portions and ribs.

### [Other Modified Examples]

In the above first embodiment, the inner frame portion 111 has the lateral beam portions 112, the longitudinal beam portions 113, the first oblique beam portions 114, and the second oblique beam portions 115. However, the portions provided in the inner frame portion are not limited thereto. For example, the longitudinal beam portions 113 may not be provided, and further another beam structure portion may be provided. In the above second embodiment, the inner frame portion 211 has the longitudinal beam portion 213, the first oblique beam portions 214, and the second oblique beam portions 215. However, the portions provided in the inner frame portion are not limited thereto. For example, the longitudinal beam portion 213 may not be provided, and further another beam structure portion may be provided.

In the above first embodiment and the above second embodiment, such a structure is adopted that the side beam portions 110, 210 of the frame members 11, 21 are directly fixed to the side sills 10. However, in the invention, another member may be interposed between the side beam portion and the side sill. As long as it is configured that the collision load input to the side sill is transmitted to the frame member, any of various connection structures can be adopted.

In the above first embodiment and the above second embodiment, such a configuration is adopted that the frame members 11, 21 have the triangular structure portions (the second triangular structure portions) AR2, AR4 in addition to the triangular structure portions AR1, AR3, respectively. However, in the invention, the frame member may not have the second triangular structure portion.

In the above first embodiment, the portions 112 to 115 constituting the inner frame portion 111 have the side wall portions 112S, 113S, 114S, 114S and the ribs 112R, 113R, 114R, 115R, respectively. However, the invention is not limited thereto. None of the portions constituting the inner frame portion may have the rib. Alternatively, only some of the portions may have the ribs.

In the above first embodiment and the above second embodiment, the frame members 11, 21 are each formed integrally. However, the invention is not limited thereto. For example, the side beam portion may be fastened to the first oblique beam portion and the second oblique beam portion by a bolt or a rivet, or the longitudinal beam portion may be fastened to the first oblique beam portion and the second oblique beam portion by a bolt or a rivet.

In the above first embodiment and the above second embodiment, sizes in the up-down direction of the portions in the frame members 11, 21 are not particularly described. However, in the invention, each of the portions can be set in any of various sizes in the up-down direction. In addition, the size in the up-down direction of each of the portions may not be uniform in the frame member, and can be set for each arrangement area.

In the above first embodiment and the above second embodiment, a floor panel is not described. However, the floor panel can be formed integrally as a part of the frame member. Alternatively, the floor panel can be a separate member from the frame member and fixed to the frame member.

### [Reference Signs List]

1: vehicle
1b: floor section
10: side sill
11, 21: frame member
110, 210: side beam portion
111, 211: inner frame portion
112: lateral beam portion
112R, 113R, 114R, 115R: rib
113, 213: longitudinal beam portion
114, 214: first oblique beam portion
115, 215: second oblique beam portion
AR1, AR3: first triangular structure portion
AR2, AR4: second triangular structure portion

## Claims

1. A lower structure of a floor section in a vehicle (1), the lower structure comprising:
paired side sills (10) that are disposed on both sides in a vehicle width direction of the floor section and each of which extends in a front-rear direction of the vehicle (1); and
a frame member (11; 21) that is disposed between the paired side sills (10), wherein
the frame member (11; 21) has:
paired side beam portions (110; 210), each of which is formed to extend in the front-rear direction along the respective side sill (10) and is connected to the respective side sill (10); and
an inner frame portion (111; 211) that is formed by combining plural beam structure portions (112, 113, 114, 115; 213, 214, 215) and connects the paired side beam portions (110; 210), and
the frame member (11; 21) has plural triangular structure portions (AR1, AR2; AR3, AR4), each of which is formed in a triangular shape in a plan view by the respective side beam portion (110; 210) and the plural beam structure portions (112, 113, 114, 115; 213, 214, 215), and which continue in the front-rear direction on the both sides in the vehicle width direction.

2. The lower structure according to claim 1, wherein
the plural beam structure portions (112, 113, 114, 115; 213, 214, 215) includes plural first oblique beam portions (114; 214) and plural second oblique beam portions (115; 215), the plural first oblique beam portions (114; 214) being each formed to extend obliquely forward to an outer side in the vehicle width direction from an inner side in the vehicle width direction, an outer end portion in the vehicle width direction of each of the plural first oblique beam portions (114; 214) being connected to the respective side beam portion (110; 210), the plural second oblique beam portions (115; 215) being each formed to extend obliquely rearward to the outer side in the vehicle width direction from the inner side in the vehicle width direction, and an outer end portion in the vehicle width direction of each of the plural second oblique beam portions (115; 215) being connected to the respective side beam portion (110; 210),
the first oblique beam portions (114; 214) and the second oblique beam portions (115; 215) are alternately arranged in the front-rear direction on each of the both sides in the vehicle width direction, and end portions of an adjacent pair of the first oblique beam portion (114; 214) and the second oblique beam portion (115; 215) in the front-rear direction are connected to each other, and
each of the plural triangular structure portions (AR1, AR2; AR3, AR4) is formed by the side beam portion (110; 210) and the adjacent pair of the first oblique beam portion (114; 214) and the second oblique beam portion (115; 215).

3. The lower structure according to claim 2, wherein
the plural beam structure portions (112, 113, 114, 115; 213, 214, 215) further include paired longitudinal beam portions (113; 213), each of which is formed to extend in the front-rear direction and is disposed to connect connection portions between the adjacent pairs of the first oblique beam portions (114; 214) and the second oblique beam portions (115; 215), and
in a case where the plural triangular structure portions (AR1, AR2; AR3, AR4) are plural first triangular structure portions (AR1; AR3),
the frame member (11; 21) has plural second triangular structure portions (AR2; AR4), each of which is formed by the respective longitudinal beam portion (113; 213) and the adjacent pair of the first oblique beam portion (114; 214) and the second oblique beam portion (115; 215), and which continue in the front-rear direction on the both sides in the vehicle width direction.

4. The lower structure according to claim 2 or 3, wherein
the plural beam structure portions (112, 113, 114, 115; 213, 214, 215) further include plural lateral beam portions (112), each of which is formed to extend in the vehicle width direction and connects a connection portion between the first oblique beam portion (114; 214) and the second oblique beam portion (115; 215) on one of the both sides in the vehicle width direction and a connection portion between the first oblique beam portion (114; 214) and the second oblique beam portion (115; 215) on another of the both sides in the vehicle width direction.

5. The lower structure according to claim 2, wherein
the connection portion between the first oblique beam portion (114; 214) and the second oblique beam portion (115; 215) on one of the both sides in the vehicle width direction is directly connected to the connection portion between the first oblique beam portion (114; 214) and the second oblique beam portion (115; 215) on another of the both sides in the vehicle width direction.

6. The lower structure according to claim 5, wherein
the plural beam structure portions (112, 113, 114, 115; 213, 214, 215) further include a longitudinal beam portion (213), which is formed to extend in the front-rear direction and is disposed to connect connection portions between the adjacent pairs of the first oblique beam portions (214) and the second oblique beam portions (215).

7. The lower structure according to claim 6, wherein
the plural triangular structure portions (AR1, AR2; AR3, AR4) are plural first triangular structure portions (AR3), and
the frame member (21) has plural second triangular structure portions (AR4), each of which is formed by the longitudinal beam portion (213) and the adjacent pair of the first oblique beam portion (214) and the second oblique beam portion (215).

8. The lower structure according to any one of the preceding claims, wherein
at least one of the plural beam structure portions (112, 113, 114, 115; 213, 214, 215) has: paired side wall portions (112S, 113S, 114S, 115S) that are formed to extend along an extending direction of the respective beam structure portion (112, 113, 114, 115; 213, 214, 215); and a rib (112R, 113R, 114R, 115R) that is formed to connect the paired side wall portions (112S, 113S, 114S, 115S).

9. The lower structure according to claim 8, wherein
the at least one of the plural beam structure portions (112, 113, 114, 115; 213, 214, 215) further has a based (113M) connecting the paired side wall portions (112S, 113S, 114S, 115S).

10. The lower structure according to claim 9, wherein
the rib (112R, 113R, 114R, 115R) is configured to rise from the based (113M).

11. The lower structure according to any one of the preceding claims, wherein
the frame member (11; 21) is formed integrally or unitary.

12. The lower structure according to any one of the preceding claims, wherein
the paired side beam portions (110; 210) are respectively fixed to the paired side sills (10).

13. The lower structure according to any one of the preceding claims, wherein
each of the paired side sills (10) has an outer side sill (100) that is disposed on an outer side in the vehicle width direction and an inner side sill (101) that is disposed on an inner side in the vehicle width direction and is fixed to the outer side sill (100), and
at least the inner side sill (101) is integrally formed with the frame member (11; 21).

14. The lower structure according to claim 13, wherein
each of the side beam portions (110) has a flange portion (110f1, 110f2) formed along the inner side sill (101) and fixed to the inner side sill (101).

15. A vehicle (1) comprising the lower structure according to any one of the preceding claims.
